Europäisches Patentamt

European Patent Office

Office européen des brevets

(11) Publication number: **0 279 901**
**A2**

## (12) EUROPEAN PATENT APPLICATION

(21) Application number: 87114126.3

(51) Int. Cl.⁴: **B60C 21/00**

(22) Date of filing: 28.09.87

(30) Priority: 21.01.87 IT 210187

(43) Date of publication of application:
31.08.88 Bulletin 88/35

(84) Designated Contracting States:
AT BE CH DE ES FR GB GR IT LI LU NL SE

(71) Applicant: **R.F.P. S.r.l. Ricostruzione Fascia Prestampata**
**S.S. 96 km. 118**
**I-70026 Modugno (Bari)(IT)**

(72) Inventor: **Ferrara, Giuseppe**
**Via Bitritto 131**
**I-70124 Bari(IT)**

(74) Representative: **Russo, Saverio, Dott. Ing.**
**Via Ottavio Serena, 37**
**I-70126 Bari(IT)**

(54) Trapezoidal shaped patch rubbers to repair broken metallic plies of tubeless or tube type radial ply tires.

(57) The patch-rubber according to the invention is intended to effect a restoration, previous or not to a retreading, of radial-ply tires in which some of the metallic cords embedded in their sidewalls are broken.

Contrary to the rectangularly shaped patch-rubbers formed by a plurality of rectangularly shaped plies whereby both metallic cords and the cords made of a fibre embedded in the various plies are parallel to each other and to the longitudinal axis A of the patch-rubber, the patch-rubber according to the invention is trapezoidally shaped, the metallic cords embedded therein are radially arranged like those embedded into the sidewalls of the tires, and the cords made of a fibre are inclined relative to the longitudinal or symmetry axis A of the whole patch-rubber.

The patch-rubber is further provided with a rubber dowel showing dimensions matching those of a window opening cut-out from the tire sidewalls, in the zone thereof where the broken metallic cords have been taken away, said rubber dowel being to be inserted into said window opening.

Moreover, on account of its peculiar pre-bent structure, stabilized by a vulcanization process, the patch-rubber may be easily put in use without being submitted to stresses in condition where no load is applied to the tire.

The rubber dowel further ensures the quick and precise positioning of the whole patch-rubber with its metallic cords arranged parallel to those of the tire.

FIG.1

## Trapezoidally shaped patch-rubber to patch breaks of the radial metallic cords of both tubeless or tube-type radial-ply tires.

The present invention has for object a patch-rubber to repair either tubeless or tube-type tires having a radial-ply structure, which have undergone injuries i.e. breaks of one or more metallic cords in their sidewalls; said patch-rubber may be applied either to tires which need only to be repaired or to those which will undergo a retreading process.

The patch-rubbers used nowadays to patch radial-ply tires having undergone injuries i.e. breaks of the metallic radial cords embedded in the radial plies constituting their sidewalls, are rectangularly shaped and constituted by a plurality of superposed plies of rubber coated parallel cords, whereby said parallel cords, forming the fabrics of each ply, are always arranged parallel to the longitudinal axis of the patch-rubber i.e. parallel to the largest dimension thereof.

In a first typical known patch-rubber, all the superposed plies, in the continuation the word layer will be used only to indicate rubber sheets without cords, comprise a fabric formed by parallel cords of a synthetic fibre e.g. nylon or rayon.

In a second typical known patch-rubber, plies comprising a fabric formed by parallel metallic cords are mixed up with plies of the above mentioned type, i.e. comprising a fabric formed by parallel cords made of a synthetic fibre.

In both said typical known patch-rubbers, the cords, either metallic or made of a synthetic fibre, are arranged, as mentioned, parallel to the longitudinal axis of the patch-rubber i.e. parallel to the largest dimension thereof.

The first type of known patch-rubbers referred to above, is not suitable to patch breaks of several metallic cords, since the cords made of a synthetic fibre neither have the strength, nor the elasticity, nor the coefficient of elongation shown by the metallic cords of the tire and would provide for bulges on the surface of the tire, when submitted to a pressure from the inside thereof.

If many of such plies are superposed to each other to increase the strength of the patch-rubber, the latter would, on one hand, become both poorly flexible and rather massive, while, on the other hand, would not provide for a strength comparable to that provided, to the side-walls of the tire, by the metallic cords therein embedded.

At its turn, the second type of known patch-rubbers, referred to above, i.e. those formed by superposing plies with a fabric of nylon cords to plies with a fabric of metallic cords, stiffen the boundaries of the repaired section, since said fabrics, mutually parallel to each other and parallel to the longitudinal axis of the patch-rubber, not only provide for patch-rubbers having a reduced flexibility, but, having regard to the rectangular shape of the patch-rubbers themselves, said fabrics will be superposed and overlap both the broken and the unbroken metallic cords of the tire, providing hence for a stiffening of the uninjured flexible zones of the tire sidewalls.

In fact, since the cords of the known patch-rubber are parallel to each other and to the longitudinal axis, i.e. to the largest dimension thereof and it is impossible to carry out the correct application of the patch-rubber, they may not match the radial disposition of the metallic cords embedded into the tire sidewalls, said cords being convergent i.e. less spaced from each other in the zone of the bead and more spaced in the zone of the tread.

This fact, i.e. the mentioned convergency of the radial metallic cords embedded into the tire sidewalls, requires that the fenster or opening, which has to be cut-out from that region of the tire where broken metallic cords have to be replaced by the metallic cords of the patch-rubber, to have compulsory a trapezoidal shape in order not to damage those cords which have not been injured.

Further, since the free surface of the patch-rubber, i.e. that intended to replace the inner surface or liner of the tire, is smoothed, the connection or bonding, between the edges of the patch-rubber and said internal surface or liner of the tire, may hardly be performed and requires the previous grinding or buffing of said edges: a badly performed overlapping and bonding does not ensure a good tightness to the air under pressure inside the tire if this latter is of the tubeless type.

Moreover, since the window shaped apertures in the sidewalls of the tire to be repaired, by the use of patch-rubbers of the above mentioned mixed type, i.e. formed by plies with synthetic fabrics and plies made of metallic cords, constitute cavities which shall be filled up to restore the uniformity of the external surface of the side-wall, and since the plug of new crude rubber to fill up these cavities, even after having been vulcanized, does not always show chemical and physical features and proprieties equal to those of the rubber forming the sidewalls of the tire, i.e. does not show the same strength to the flection stresses and is susceptible to undergo a different agening process, a bulge may appear, during both the vulcanization by repairing and retreading, on the external surface of the tire, in correspondence of the repaired region, by the effect of the mentioned air pressure contained inside the tire; said bulge being provoked by a settling of both the patch-rubber and the filling rubber plug, which provokes moreover, as a consequence, the build-up of an hole of the internal surface or liner of the tire itself.

On the contrary, if the patch-rubber is applied without cutting out the window shaped opening which allows to take out the broken metallic cords, i.e. if the patch-rubber is directly superposed to the internal surface or liner of the tire, thereby crossing the cords of the patch-rubber with those of the tire itself over the injured zone thereof, this provides for excessive stiffening in correspondence of the flexible zone of the repaired tire sidewall and, consequently, during the subsequent use of the tire, for an abnormal wear and overheating in correspondence of the region where the patch-rubber has been applied to the tire.

Finally, since the patch-rubbers available nowadays are flat and must hence be bent along their longitudinal axis prior to said patchrubbers may be applied into and onto the sidewall of the tire to be repaired, said nowadays available patch-rubbers undergo, even when the tire is in no load condition, to a permanent flection stress which provides for the compound-batch forming the extrados of said patch-rubbers to be stretched as well as the cords made of a synthetic fibre.

Said permanent flection stress provides equally for the compound-batch forming the intrados of said patch-rubbers to be compressed, causing, during the loaded use, increased flection stresses which may provide for stretching the metallic cords and, since such compression and stretching stresses alternate, even serious injuries to the compound-batch may arise.

The invention, as it is defined in the appending claims, solves the problem of overcomming the mentioned drawbacks connected with the patch-rubbers of the prior art, and this by means of a patch-rubber provided of metallic cords embedded therein, having the same radial disposition and orientation shown by the radial metallic cords of the tire; said patch-rubber comprising means which allows indeed the perfect application of said patch-rubber to those zones of the tire sidewalls where a break of said radial metallic cords has took place, in such a way as to replace the broken metallic cords with those embedded in the patch-rubber and in such a way as to prevent the metallic cords of the patch-rubber to overlap those, not damaged, of the tire.

The invention also solves the problem of decreasing the flection and stretching stresses in the compound-batches, in the metallic cords, and in the cords made of synthetic or natural fibres which constitute the patch-rubber according to the invention; this by means of such a patch-rubber, as defined in the claims, which may be stretched only during the loaded use of the tire; said patch-rubber comprising a plurality of plies including cords made of natural or synthetic fibres arranged in such a way that they are submitted to stresses only by a component of the stretching stresses, when in use.

The foundamental advantages of such a patch-rubber arise hence from the fact that the tires repaired and/or retread with the use of such a patch-rubber, irrespective whether autoclaves or high pressure molding machines are used, show technical features and performances quite identical to those of fully new tires.

An additional advantage is to be seen in that such a patch-rubber may be very easily applied whithout waste of time.

The invention is disclosed in detail hereafter, by making reference to the three appended sheets of drawings which show a preferred embodiment thereof and whereby:

Fig. 1a, shows the patch-rubber as looked at from the side of its free surface, i.e. from the right side of Fig. 1b;

Fig. 1b, shows the longitudinal cross section of the patch-rubber, according to the Y-Y line on Fig. 1a;

Fig. 1c, shows the patch-rubber as looked at from the side of its bonding surface, i.e. from the left side of Fig. 1b;

Fig. 2, shows the trapezoidally shaped window aperture for the connection of the patch-rubber and both the disposition and orientation of the metallic radial cords in the tire sidewalls;

Fig. 3, shows an example of the way in which the patch-rubber is applied onto and into the sidewalls of the tire;

Fig. 4, shows the patch-rubbers after having been put in use;

Fig. 5, shows the patch-rubber deprived of the ply having cords of synthetic or natural fibres embedded therein;

Figs. 6a and 6b, show examples of interruptions of the cords made of synthetic or natural fibres.

As it will be apparent from the drawings, the patch-rubber according to the invention, in its simplest embodiment, is constituted of two layers and two plies.

The first layer 1a, which is intended to form the internal surface or liner of the tire, is made of a sheet of elastic rubber susceptible to withstand to the pressure of the air contained inside the tire itself, when in use.

Said first layer 1a has a surface 1a/1, having the function of a free surface, which is knurled so as to avoid grinding thereof, to make the rolling operation easier and consequently the restoring of the internal surface or liner of the tire with crude elastic rubber and to allow the retightening and a better cooling of the repaired zones.

To said first layer 1a may be superposed a second layer 1b, which is made of a rubber having a lower elasticity so as to avoid a sudden transition from a very elastic layer to a less elastic one, like the third ply 2, disclosed herebelow.

Said third ply 2 is a layer of rubber coated parallel cords 2a made of e.g. a synthetic fibre, so oriented as to form an angle greater then 0° in respect to the longitudinal or symmetry axis A, which coincides with the longitudinal or symmetry axis A of the patch-rubber, according to a technique already claimed in the Italian Patent Application No. 2101/A87, whose priority is claimed by the present application.

The forth ply 3, superposed to the mentioned ply 2, is constituted by a sheet of rubber in which is embedded a plurality of metallic cords 3a which are of the same nature and type as those which constitute the metallic radial cords of the tire and which are arranged in such a way as to converge, like those of the tire, towards a common center point.

This allows, whith the use of the patch-rubber according to the invention, said metallic cords 3a to be concentrated i.e. less spaced from each other, in correspondence of the bead, and spreaded, i.e. more spaced from each other, in corraspondence of the tread.

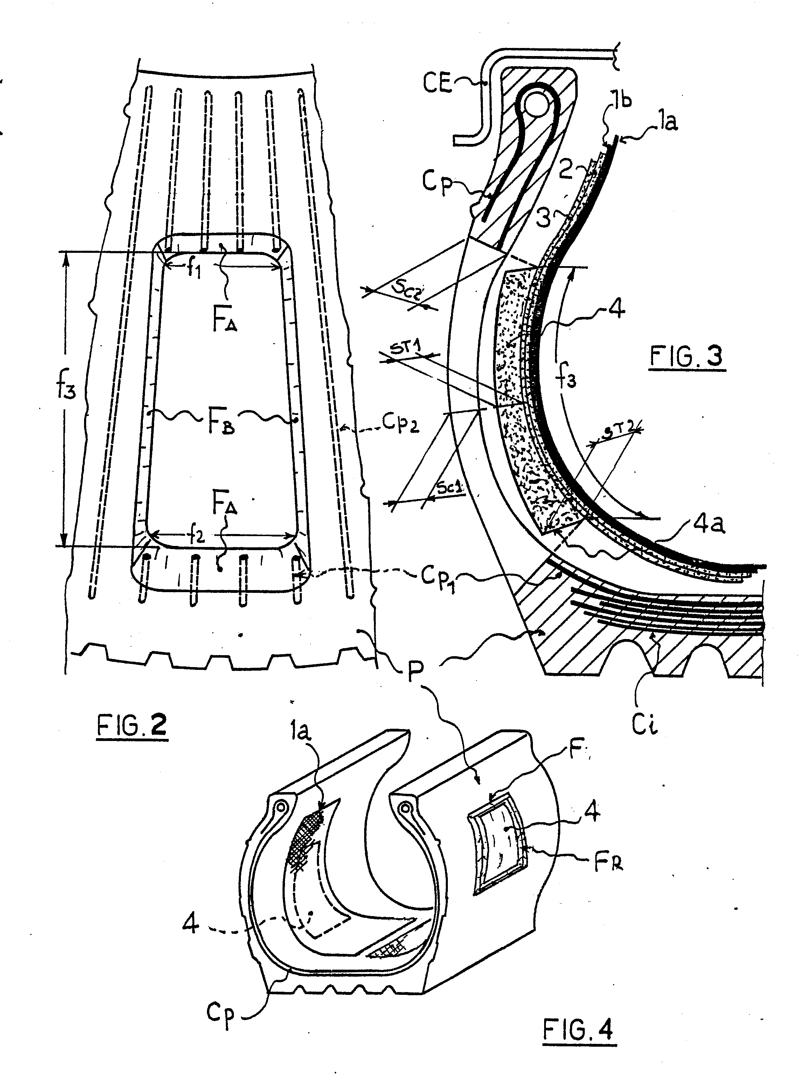

On said forth ply 3 there is applied a trapezoidally shaped rubber dowel 4, whose surface of contact with said forth ply 3 is a trapezium whose minor and major bases have respectively a length $f_1$ and $f_2$, $f_2$ being greater then $f_1$, equal to the corresponding transversal dimensions of said forth ply 3 and an height $f_3$ of the same magnitude as the radial dimension (see Fig. 3) of the zone of inflection of the tire, i.e. that zone of sidewalls from which the broken metallic cords have to be cut-out and taken away, which is obviously variable with the dimensions of the tire itself. Said rubber dowel 4 has its lateral faces 4a and 4b knurled and slightly inclined in respect to the perpendicular N to the surface of said ply 3 of the patch-rubber to make it easier, as explained herebelow, the insertion of an adhesive rubber compound dissolved in a solvent i.e. of a cement, to allow the bonding between the edges of said rubber dowel 4 and the edges FA and FB (see Fig. 2) of the trapezoidally shaped window aperture F, cut-out in the sidewalls of the tire.

The dimensions $f_1$, $f_2$ and $f_3$ of said rubber dowel 4 may assume various values related to the predetermined dimensions of the patch-rubbers i.e. related to the various dimensions of the tires, whose efficiency has to be restored and/or renewed.

The area in correspondence of the internal surface or liner of the tire and the shape of the window aperture to be cut-out from the sidewalls of the tire, in that zone in which a break of the metallic cords there embedded has took place, have to be equal to those of the contacting area between the rubber dowel 4 and the underlying forth ply 3.

The longitudinal and the transversal dimensions, i.e. the length and the width of both the first and second layers 1a, 1b and of the third ply 2 excede those of the forth ply 3 in such a way as to make it easier the restoring of the superficial uniformity and the tightening to the air of the window aperture F allalong the perimeter shared by said forth ply 3 and by the internal surface or liner of the tire; this being of the highest importance with tires of the tubeless type.

In order to ensure this result, the first layer 1a protrudes allaround the surface of the second layer 1b so as to form a free strip having a width $l_1$.

In turn, said second layer 1b protrudes allaround the surface of the third ply 2 so as to form a free strip having a width $l_2$.

Once more in turn, said third ply 2 protrudes allaround the surface of the forth ply 3 so as to form a free strip having a width $l_3$.

Said respective widths $l_1$, $l_2$ and $l_3$ of said respective protruding free strips may be, by way of example, 6mm. and even more, if a better and better tightening and smoothing of the repaired zone and of the surfaces thereof is desired.

The rectilinear axes, parallel to which the cords 2a forming the fabric of the third ply 2 are arranged, form with the metallic cords 3a, embedded in the forth ply 3, an angle whose value is variable between a minimum and a maximum, since said metallic cords 3a are radially arranged i.e. convergent, inside said forth ply 3.

It appears however suitable that the maximum value of said angle does not excede 20°.

In order to obtain a more uniform strength of the patch-rubber, when this latter is intended to be used in repairing e.g. tires for digger machines, like tractors, bulldozers and so on, and when said patch/rubber is used previous to a retreading of tires by means of high pressure molding machines, the above disclosed embodiment of the patch-rubber according to the invention may be implemented by superposing to the third ply 2 a further ply having the same structure and features as said ply 2, whereby however the nylon cords, forming the fabric of said further ply are so oriented as to form with the common longitudinal or symmetry axis A, an angle similar to that formed by the cords embedded in the underlying third ply 2, but on the opposite side of said longitudinal or symmetry axis A.

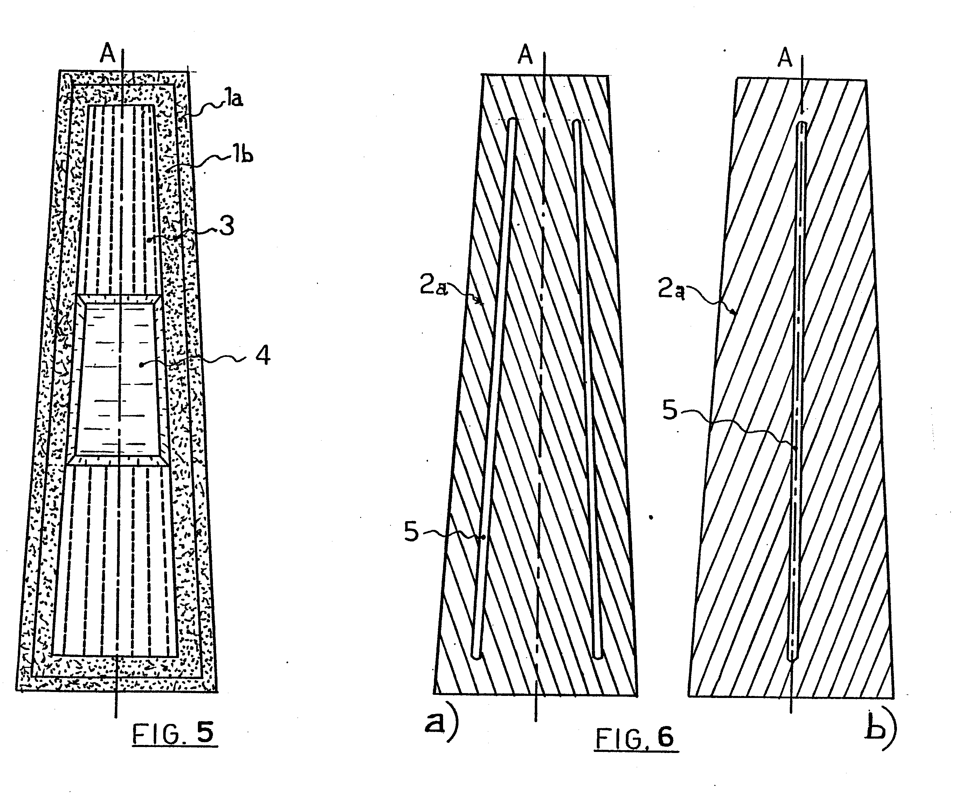

In the hereabove disclosed embodiment, in order to prevent the flexibility of the patch-rubber from being decreased, i.e. in order to allow easy deformations and flections of the tire sidewalls, when loaded, the cords forming the fabric of said plies 2, with a synthetic fabric embedded therein, may further be interrupted by means of cutsin like those shown in Figs. 6a and 6b, i.e. either by means of a cut-in 5 lying in coincidence with the longitudinal or symmetry axis A of the patch-rubber (Fig. 6b) or by means of a plurality of cutsin 5, radially oriented like the radial cords of the tire and matching the direction thereof (see Fig. 6b).

The transversal thickness $ST_2$ of the rubber dowel 4, at the extremity 4a thereof, excedes the thickness $ST_1$, in the middle of said rubber dowel, and is such that $ST_1 = SC_1$ and $ST_2 = SC_2$, where $SC_1$ and $SC_2$ are the corresponding thicknesses of the tire sidewalls, measured along the direction from the inside to the outside thereof.

This allows the rubber thickness, in the repaired zone, to match the rubber thickness in the tire sidewalls, when moving along said sidewalls, from the bead towards the tread and viceversa.

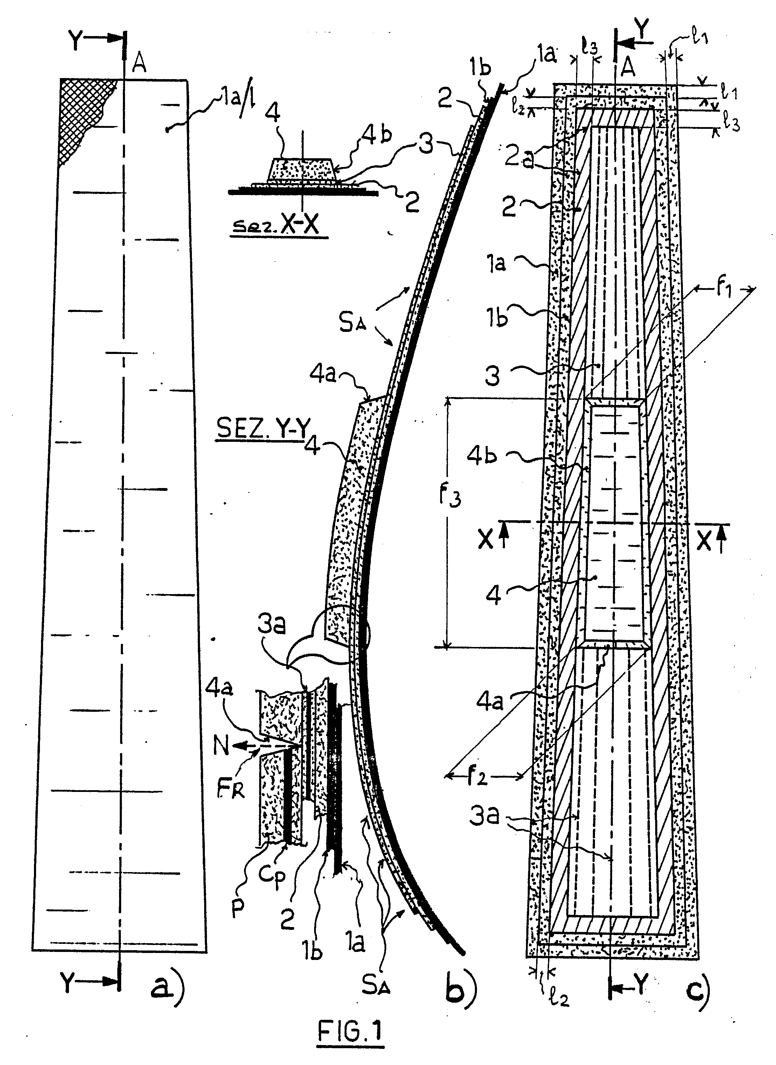

As it is apparent from the enlarged detail of Fig. 1b and in Fig. 1c, the metallic cords 3a, which extend, vertically on the drawings, from the major base to the minor base of the trapezoidally shaped ply 3 of the patch-rubber, travel, without any interruption, under the rubber dowel 4 only and do not protrude laterally outside the contacting surface which is common to said rubber dowel 4 and to said forth ply 3.

The correct application of the patch-rubber according to the invention is made easier and ensured by the presence of said rubber dowel 4, which allow a precise positioning of said patch-rubber.

In fact, after having cut-out the trapezoidally shaped window aperture F, having dimensions $f_1$, $f_2$ and $f_3$ equal to the corresponding external dimensions of the rubber dowel 4, the same rubber dowel is inserted and matches the dimensions of said window aperture F, thereby providing for the exact and precise positioning of the whole patch-rubber.

To this purpose, the trapezoidally shaped window aperture F is cutout in such a way that its lateral edges FB (Fig.2) follow the radial orientation of the metallic cords embedded in the tire sidewalls and allow, hence, the juxtaposition and superposition of the metallic cords 3a embedded in the forth ply 3 of the patch-rubber only to the extremities $CP_1$ of the metallic cords embedded in the tire sidewalls, the broken sections of said metallic cords having been taken away, thereby allowing the metallic cords 3a embedded into said forth ply 3 of the patch-rubber to replace only said taken away broken sections.

The overlapping, at the outside of said lateral edges FB of the window aperture F, between the metallic cords 3a, embedded into said forth ply 3 of the patch-rubber, and the unbroken metallic cords $CP_2$, embedded into the tire sidewalls, is made impossible since, the mere fact that the base of the rubber dowel 4 has the same transversal dimensions as the surface it has in common with the forth ply 3 to which it is superposed, prevents said metallic cords 3a embedded into said forth ply 3 from overlapping those $CP_2$, embedded into the tire sidewalls and lying immediately adjacent to said lateral edges FB of said window aperture F.

Another important feature of the patch-rubber according to the invention is to be seen in that its surface, instead of being flat as in the prior art, is bent as indicated on Fig. 1b, along its longitudinal or symmetry axis A.

To this purpose, the metallic cords 3a embedded into the forth ply 3 of the patch-rubber are of the same type and structure as those embedded in the tire sidewalls of the tire to be repaired, i.e. not only they are made in the same way and of the same material, but show moreover the same curvature so as to prevent, after vulcanization of the so bent patch-rubber, internal tensions and stresses from arising.

This not only makes the put-in-use of the patch-rubber easier, but also provides for a longer endurance of the tires repaired and/or retread with the employment of the patch-rubber according to the invention, since said patch-rubber integrates itself fully and perfectly into the tire sidewalls, thereby opposing the same withstand to the stresses provoked by the alternative movements of flection which modify the bending of the radial section of the tire itself and showing the same elastic performances as in a fully new tire.

It is pointed out that, at a speed of 100 km/h, the radial section of a tire may be constrained to bend about thousand times in a minute.

It is hence easy to realise that both the dowel and the other plies may undergo more injuries and an increased wear, both in the radial direction and in a direction orthogonal to the latter, if the patch/rubber is foundamentally falt-shaped, because, in this latter case, after the patch-rubber has been put in use, the metallic cords and the compound-batches thereof are submitted to stresses in order to adapt themselves and to match the curvature of the tire sidewalls, even in the no load condition.

The prebending of the patch-rubber, further increasing the flexibility of the patch-rubber itself, acts in such a way that, in the repaired zone, the same flexibility is provided as in the uninjured zone, thereby overheatings are prevented from arising.

The said flexibility, as already mentioned, may be further increased by means of the cuts-in 5 shown in Figs. 6a and 6b. The patch-rubber according to the invention, ready for use, is previously vulcanized.

The bonding materials consist in adhesive rubber compounds dissolved in a solvent, i.e. cements, and in adhesive rubber sheets which shall respectively be payed or applied onto the bonding surface Sa (see Fig. 1b) of the patch-rubber and into the triangularly shaped groove FR (see Fig. 1b) formed by the knurled edges 4a and 4b of the rubber dowel 4 and by the edges FA and FB of the window aperture F.

The presence of said triangularly shaped groove FR between the edges FA and FB of the window aperture F and the edges 4a and 4b of the rubber dowel 4 is made possible and ensured by the inclination of said edges relative to the perpendicular N to the internal surface or liner of the tire sidewalls (see Figs. 1b and 3).

After having filled up said triangularly shaped groove FR with the cement and the adhesive rubber sheets, and after having applied the cement and the adhesive rubber sheets onto the bonding surface Sa, by means of a first rolling operation on the free surface 1a/1, the patch-rubber is brought into a perfect adherence onto the internal surface or liner of the tire, while by means of a second rolling operation, the rubber, filling up the triangularly shaped groove FR is compressed and brought to a level; the external surface of the tire being thereby made to be uniform and smooth.

The vulcanization of the bonding surfaces is further effected so that the patch-rubber will be permanently and perfectly bonded to the tire thereby avoiding it undergoes to any deformation.

The temperature to which the vulcanization is effected depends on the type of cement and filling up adhesive rubber sheets used to perform the bonding.

The patch-rubber, as well as the rubber dowel, may take any suitable dimensions in accordance to the dimensions of the tires to be repaired therewith and to the extensions of the breaks they show.

Also the diameter of the steel cords 3a embedded into the forth ply 3 may vary according to the dimensions and the use, i.e. the kind of vehicle, for which the tire to be repaired is intended for.

According to a further simplified embodiment thereof, the patch-rubber according to the invention may be constituted only by the ply 3 having the metallic radial cords 3a embed ded therein, said ply 3 being superposed to the elastic rubber layer 1, and by the rubber dowel 4, as indicated on Fig. 4.

This provides for a further increasing of the patch-rubber flexibility.

Obviously, with the plies having a fabric made of a synthetic fibre embedded therein, an easier repairing previous to a retreading by means of high pressure molding machines is obtained and patch-rubbers are obtained which are more suitable for repairing tires intended for digger machines, like tractors, bulldozers and so on, since the therewith obtained withstand to deformations is uniform allalong the internal perimeter of the window aperture F in which the rubber dowel is to be inserted.

The longitudinal dimensions, along the symmetry axis A, of the patch-rubber according to the invention shall always be such as to allow said patch-rubber to extend, when put in use in the tire, from the bead until about the middle of the tread thereof.

The cords 2a forming the fabrics embedded into the plies 2 may be made, if necessary also with natural fibres.

The rubber dowel 4 is realised with an homogeneous compound-batch having the same chemical and physical features as the compound-batch constituting the sidewalls of the tire.

This allows a tire to be repaired according to the best skill, since it prevents from using materials i.e. compound-batches others then those constituting the tire, as it happens with the patch-rubbers deprived of the rubber-dowel 4.

When repairing the sidewalls of tires intended for digger machines, like tractors, bulldozers and so on, the patch-rubber according to the invention may be reduced to a very large rubber dowel 4, superposed to a ply 3 having metallic radial cords embedded therein and showing the same width as said rubber dowel 4 (see Fig. 5).

This allows patch-rubbers of reduced width to be provided for, merely by cutting longitudinally, between two adjacent metallic cords, a larger patch-rubber.

The supply of the stocks may be made thereby easier and unproblematic.

The prebending of the patch-rubber according to the invention, makes the use thereof easier and suitable also for tires of the hollow sidewalls type, because it is submitted to reduced stresses.

According to a peculiar embodiment of the invention, the rubber dowel may be previously vulcanized on its own and successively applied and connected to the ply 3 in which the metallic radial cords 3a are embedded.

## Claims

1) A trapezoidally shaped patch-rubber intended to repair breaks of the metallic cords embedded in the sidewalls of both tubeless and tube-type radial tires, constituted by the superposition of layers (1a, 1b, 4) made of rubber only and plies (2, 3) in which are respectively embedded either cords (2a) made of a fibre or metallic cords (3a); said layers and plies being made solidar to each other by a vulcanization process and having in common a longitudinal or symmetry axis (A) and said trapezoidal shape itself, characterized by a first layer constituted by a trapezoidally shaped dowel (4), made up only with rubber, which is completely superposed and in contact, by its base, onto the surface of a quasi-central zone of an also trapezoidally shaped second ply (3) having a greater axial length then the dowel (4) and in which is embedded a plurality of metallic cords (3a) having a radial orientation like that of the radial metallic cords embedded in the sidewalls of the tire to be repaired; said metallic cords (3a) being so oriented as to converge towards a common center point; said second ply (3) being, in turn, superposed and in contact, on its side opposite to said rubber dowel (4), directly to, at least, one or more layers (1a, 1b) made of rubber only as shown in Fig. 5, or to one or more third plies (2) which are also trapezoidally shaped, but have an overall area greater then that of said second ply (3), in such a way as to form, with said larger area of said plies (2), a perimetral free strip having a width $l_3$ allalong the perimeter of said second ply (3); said third plies (2) being one or more and each thereof being provided of an overall area which is larger then the area of the layer to which it is superposed; said plies (2) having embedded therein fabrics formed by rectilinear cords (2a) made either of synthetic fibres e.g. nylon, or natural fibres; said rectilinear cords (2a) being arranged parallel to each other and displaced relative to the longitudinal or symmetry axis (A) of each ply (2) and hence relative to the longitudinal or symmetry axis (A) of the whole patch-rubber; said displacement relative to said longitudinal or symmetry axis (A) being alternatively in the clockwise and the anticlockwise direction and such to form an angle greater then 0° with said longitudinal or symmetry axis (A); said plies (2) being in turn superposed to at least one layer (1a, 1b) made of rubber only, each with a different degree of elasticity, having a reduced thickness, a larger overall area and the same trapezoidal shape of the same plies (2); the overall area of the outermost layer (1a) having a greater elasticity, being larger then the area of the inner layer (1b) having a lower elasticity, so as to form free strips having a width $l_1$ and $l_2$ respectively allaround said plies (2) superposed to them; the so constituted patch-rubber being bent along the longitudinal or symmetry axis (A) likewise as the radial flex sections of the tires sidewalls in such a manner that the rubber dowel (4) is located on the extrados of said patch-rubber; the vulcanization being to be effected after the patch-rubber has been bent; the metallic cords (3a) having been submitted to the necessary treatments so as to maintain the obtained curvature in condition of no load, whereby internal tensions and stresses are prevented to arise inside the patch-rubber.

2) A patch-rubber as according to claim 1, further characterized by means to further increase its flexibility like an interruption in the continuity of said cords (2a) made of a synthetic fibre and embedded into said third plies (2) by means of cuts-in (5) parallel to or anyway inclined relative to the longitudinal or symmetry axis (A) of said patch/rubber.

3) A patch-rubber as according to claim 1, characterized in that the lateral faces (4a, 4b) of the rubber dowel (4) are knurled and more or less inclined relative to the perpendicular (N) to the surface of both said second plies (3), comprising said metallic cords (3a), and said third plies (2), comprising said cords (2a) made of a fabric, in such a way as to form with the edges of a window aperture (F) a groove (FR) having a triangularly shaped cross section such to allow the insertion of adhesive rubber dissolved into a solvent to act as a cement and the filling up between said lateral faces (4a, 4b) of said dowel (4) and the external surface of the tire sidewall, the transversal thickness in its middle ($ST_1$) of the dowel itself, being lower then the thickness ($ST_2$) it has in correspondance of its transversal edges at its extremities.

4) A patch-rubber as according to claim 1, characterised in that the free surface (1a/1) of the outermost rubber layer (1a), having the largest overall area, is fully knurled.

5) A patch-rubber as according to the preceding claims, characterised by one or more plies (3) comprising said rectilinear metallic cords (3a); said metallic cords being arranged to converge towards a single point likewise as the radial metallic cords of the tire; the application of the patch-rubber having to be effected in such a way that its longitudinal or symmetry axis (A) coincides with that radial cord of the tire which lies in the middle of the group of broken cords of the tire itself.

6) A patch-rubber as according to the preceding claims, characterised by a trapezoidally shaped rubber dowel (4), made of a rubber having the same features and performances as those of the rubber by which are made the tire sidewalls, whose trapezoidally shaped base has its minor and major bases showing the same transversal dimensions as the ply (3) to which it is superposed and its longitudinal dimension i.e. its heigth ($f_3$) equal to that of the window opening (F), cut out in the tire sidewalls, in which the dowel (4) has to be inserted i.e. equal to the length of the section having been cut-out from the flex zone of the tire sidewalls.

7) Trapezoidally shaped patch-rubber to patch breaks of the radial metallic cords of both tubeless or tube-type radial-ply tires, characterised in that it has a longitudinal cross section (Y-Y) bent, likewise as the sidewalls of the radial tire for repairing which it is intended, in such a way that said rubber dowel (4) is located on the extrados of the so bent patch-rubber and the rubber layer (1a), which constitutes the patch-rubber free surface, is located in the intrados of the so bent patch-rubber; the axes of said metallic cords (3a) being already bent by construction i.e. said metallic cords (3a) having been submitted to the necessary treatments to provide they maintain their curvature in no load condition, whereby internal tensions and stresses provoked by external stresses are prevented from arising; the vulcanization of the com ponent elements made of rubber being effected in such a way that the no load condition of the vulcanized rubber is that corresponding to the patch-rubber being bent.

8) Trapezoidally shaped patch-rubber as in fig. 5, characterized by one or more plies (3) in which are embedded metallic radial cords (3a), directly superposed to layers (1a) and/or (1b) of elastic rubber only, without interposing the plies (2) including fiber cords.

9) A trapezoidally shaped patch-rubber to repair breaks of the metallic cords embedded in the sidewalls of both tubeless and tube-type radial-ply tires, characterised by a plurality of plies (2) having embedded therein fabrics formed by a plurality of rectilinear cords (2a) which are made of a synthetic or natural fibre and arranged parallel to each other and to a common direction; said common direction being so inclined relative to the longitudinal or symmetry axis (A) of each ply (2) as to form therewith an angle greater then 0°, preferably variable around 20°; said plies (2) being so superposed to each other that their respective longitudinal or symmetry axes (A) are all oriented according to a common direction, this latter being the direction of the longitudinal or symmetry axis (A) of the whole patch-rubber, whereby two of said plies (2), adjacent to each other, are so superposed that their respective cords (2a) form said angle greater then 0°, with said longitudinal or symmetry axis (A) of the whole patch-rubber and, relative to the same, alternatively in the clockwise and in the anticlockwise direction.

10) Use of a trapezoidally shaped patch-rubber as according to anyone of the preceding claims to repair breaks of the metallic cords embedded into the sidewalls of a radial-ply tire, characterised in that the longitudinal or symmetry axis (A) of said patch-rubber is so positioned as to lay superposed to the direction of one of the radial cords in the tire sidewalls, and in that the major base of the trapezium constituting said patch-rubber is so positioned in correspondance of the tire tread that the minor base of said trapezium is located in correspondance of the underbead of said radial-ply tire; the rubber dowel (4) having been inserted into the trapezoidally shaped window opening (F) cut-out in the tire sidewalls from which the broken sections of the radial metallic cords have been taken away, such trapezoidally shaped opening F having the same trasversal dimensions of the rubber dowel (4) itself.

**FIG.1**

FIG. 2

FIG. 3

FIG. 4

FIG. 5

FIG. 6